# EUROPÄISCHE PATENTSCHRIFT

(11) **EP 1 398 620 B1**
(45) Veröffentlichungstag und Bekanntmachung des Hinweises auf die Patenterteilung: **23.01.2008**
(21) Anmeldenummer: 03014890.2
(22) Anmeldetag: 01.07.2003
(51) Int. Cl.: G01N 21/88

(54) **Verfahren und Vorrichtung zum visuellen Erkennen von Farbglanzabweichungen**
Method and apparatus for visual recognition of colour gloss deviations
Procédé et dispositif pour la reconnaissance visuelle de déviations de brillant coloré

(30) Priorität: 13.09.2002 DE 10242620
(43) Veröffentlichungstag der Anmeldung: 17.03.2004
(73) Patentinhaber: Dr.Ing. h.c. F. Porsche Aktiengesellschaft, 70435 Stuttgart (DE)
(72) Erfinder: Ringler, Ralf, 74632 Neuenstein (DE); Pawlowski, Mario, 70825 Münchingen (DE)

(56) Entgegenhaltungen:
- DE-A- 10 103 555
- DE-C- 3 418 317
- DE-C- 19 830 745
- US-A- 5 636 024
- US-A- 5 686 987

## Beschreibung

Die Erfindung bezieht sich auf ein Verfahren und eine Vorrichtung zum visuellen Erkennen von Farbglanzabweichungen nach dem Oberbegriff des Anspruchs 1.

Aus der EP 0 286 994 A2 ist ein Verfahren und eine Vorrichtung zum Erkennen von Oberflächenfehlern, vorzugsweise zur Erkennung von Lackfehlern auf der Oberfläche einer Kraftfahrzeugkarosserie bekannt. Mittels eines Beleuchtungssystems wird auf der Oberfläche ein Lichtstreifen erzeugt und dieser durch eine Relativbewegung zwischen dem Beleuchtungssystem und der Oberfläche über diese hinweggeführt und streifenförmige Abschnitte der Oberfläche der Gegenstände werden jeweils im Bereich des Lichtstreifens schrittweise aufgezeichnet. Ferner ist aus der WO 98/08078 eine Vorrichtung zur visuellen Inspektion der Oberflächenbeschaffenheit von Abmusterungsflächen, insbesondere von lackierten Karosserien mittels mehrerer Leuchtelemente bekannt, deren Hauptstrahlrichtung jeweils unter schrägen Winkeln zur Abmusterungsfläche verläuft.

Aus der DE 101 03 555 A1 ist ebenfalls ein Verfahren und eine Vorrichtung zum visuellen Erkennen von Farbglanzabweichungen in einer Oberflächenlackierung eines Fahrzeugs 1 bekannt. Eine Lichtquelle 6 mit mehreren fest positionierten Lichtstrahlern in Form einer Lichtwanne mit einer Reihe von parallel angeordneten Leuchtstoffröhren ist in einem vorbestimmten Abstand zu einigen Außenflächen 2-5 eines Fahrzeugs 1 angeordnet. Diese Außenflächen werden von den Leuchtstoffröhren der Lichtquelle 1 partiell flächig angestrahlt. Insbesondere werden eine Seitenfläche des Fahrzeugs und der Fahrzeughinterwagen erfasst. Entlang eines durch den Verlauf einer Schiene 11 festgelegten Weges sind mehrere vorbestimmte Betrachtungspositionen 13-16 angeordnet. Die Kamera 12 beobachtet die angestrahlte Flächen unter vorbestimmten Sichtbereichen und von den festgelegten Betrachtungspositionen aus.

Aufgabe der Erfindung ist es, ein verbessertes Verfahren und eine Vorrichtung zum visuellen Erkennen von Farbglanzabweichungen, insbesondere einer Lackwolkigkeit und einer Lackfleckigkeit in einer Oberflächenlackierung eines Fahrzeugs zu schaffen.

Diese Aufgabe wird erfindungsgemäß durch die Verfahrensmerkmale der Ansprüche 1 und 2 sowie der Vorrichtungsmerkmale gemäß der Ansprüche 3 bis 8 gelöst.

Die mit der Erfindung hauptsächlich erzielten Vorteile bestehen darin, daß ein visuelles Erkennen von Unregelmäßigkeiten der Fahrzeuglackierung schon im Anfangsstadium erfolgt und entsprechende Korrekturmaßnahmen zur Fehlerbeseitigung eingesetzt werden können. Zum visuellen Erkennen dieser Ungleichmäßigkeiten, wie Lackwolkigkeit und Lackfleckigkeit werden die Außenflächen der beiden Fahrzeugseiten sowie weitere Flächen des Fahrzeugvorder- und -hinterwagens von Lichtstrahlen partiell flächig angestrahlt und diese Flächen werden im Abstand zum Fahrzeug unter vorbestimmten Sichtbereichen und von festgelegten Betrachtungspositionen auf einem markierten Weg beurteilt. Der markierte Weg besteht vorzugsweise aus einem Halbkreis an den Fahrzeugseitenflächen und einem anschließenden Kreisabschnitt an dem Fahrzeugvorder- und -hinterwagen. Auf diesem Weg sind die Betrachtungspositionen den Lichtstrahlern zugeordnet, wobei zwischen den Betrachtungspositionen auf dem markierten Weg weitere Positionen zur Inaugenscheinnahme der Fahrzeugflächen bestehen können. Hierdurch wird in vorteilhafter Weise erreicht, daß die Lackwolkigkeit bzw. die Lackfleckigkeit überhaupt zu erkennen ist; denn es ist nicht nur die Beleuchtung entscheidend, sondern auch der Beurteilungsabstand und die Betrachtungspositionen zum Fahrzeug. Nur wenn die gesamte Beurteilungsfläche insgesamt angesehen werden kann, können Wolken und Flecken in der Oberfläche der Karosserie festgestellt werden.

Es hat sich herausgestellt, daß aufgrund physikalischer Gegebenheiten an vertikalen Flächen (z.B. Türen) nie so viel Lack aufgespritzt werden kann wie an horizontalen Flächen (z.B. Motorhaube). Durch zu geringe Schichtdicke des farbgebenden Lackes (Basislack) werden dann vor allem an den Seiten der Karosserie Wolken und Flecken sichtbar. In normal beleuchteten Fabrikhallen, Lackierstraßen und sogar auf gut beleuchteten Prüfplätzen sind wolkig und fleckig lackierte Karosserien kaum erkennbar.

Um diesem abzuhelfen, sind die Lichtstrahler beabstandet zu beiden Seiten des Fahrzeugs jeweils in der Fahrzeuglängsmittenebene für die Fahrzeugseitenflächen und jeweils in der Fahrzeugmittenquerebene für den Fahrzeugvorder- und -hinterwagen angeordnet. Die Betrachtungspositionen sind auf dem markierten Weg unmittelbar hinter den Lichtstrahlern in der Fahrzeugmittenquerebene angeordnet und die weiteren Betrachtungspositionen für die dem Fahrzeugvorder- und -hinterwagen zugeordneten Lichtstrahlern sind in der Fahrzeuglängsmittenebene jeweils zu beiden Seiten dieser Lichtstrahler auf dem Weg vorgesehen. Insbesondere sonder Lichtstrahl des jeweiligen Lichtstrahlers etwa mittig des Fahrzeugvorder- bzw. -hinterwagens sowie der Fahrzeugseitenflächen auftreffen und die Lichtkegel der Lichtstrahler umfassen die gesamte Länge der Fahrzeugseitenflächen und die des Vorder- und Hinterwagens. Der Sichtbereich aus den seitlichen Betrachtungspositionen auf dem markierten Weg einerseits auf die gesamten Fahrzeugseitenflächen und andererseits überdecken sich diese Sichtbereiche mit den Sichtbereichen aus den vorderen und hinteren Betrachtungspositionen auf den Vorder- und Hinterwagen.

Hierdurch wird erreicht, daß einerseits über einen jeweils mittig angeordneten Lichtstrahler jeder Fahrzeugseite sowie am Fahrzeugvorder- und -hinterwagen zum einen die gesamte Beurteilungsfläche ausgeleuchtet und von vorbestimmten Betrachtungspositionen aus angesehen werden kann. Es hat sich bei der Beurteilung von Lackflächen an Karosserien herausgestellt, daß sich schon geringfügige Parameterabweichungen bei bestimmten Lichtverhältnissen als gravierender Mangel herausstellen. Wurde z.B. die Türfüllerlackierung wegen eines Staubpartikels bearbeitet (geschliffen) und danach der farbgebende Basislack (z.B. Silbermetallic) unterschichtet, so zeichnet sich später bei direkter Sonneneinstrahlung ein heller Fleck in der Tür ab. Wurde die Schichtstärke gravierend unterschritten, so zeichnet sich der Fleck an den Rändern klar- und stark ab. Bei nur geringfügiger Unterschichtung sind die Ränder des Schleiflacks verschwommen und somit vom Kunde schlechter erkennbar.

Zum weiteren partiellen Beurteilen der Lackoberfläche der Fahrzeugseiten sowie des Fahrzeugvorder- und -hinterwagens sind vorzugsweise je Fahrzeugseite zwei Lichtstrahler vorgesehen, deren Lichtkegel sich auf den Seitenflächen überschneiden und die Fahrzeugseitenfläche sowie Flächen des Vorder- und Hinterwagens bis zur Fahrzeuglängsmittenebene ausleuchtbar sind. Die Betrachtungspositionen sind die gleichen wie bei nur einem Lichtstrahler, wobei diese auf dem markierten Weg für jede Fahrzeugseite jeweils hinter den beiden Lichtstrahler in der Fahrzeugmittenquerebene vorgesehen sind und der Sichtbereich sich jeweils über einen Teilbereich der Seitenfläche erstreckt und sich mit den Sichtbereichen aus den vorderen und hinteren Betrachtungspositionen an den Seitenflächen überschneiden.

Damit eine exakte Ausleuchtung der zur beurteilenden Fahrzeugfläche erfolgen kann, sind die Lichtstrahler für die Fahrzeugseitenflächen vorzugsweise derart ausgerichtet, daß der Lichtstrahl etwa unter einem Winkel von 90° zur Bodenfläche ausgerichtet und mittig auf der zu prüfenden Fläche auftrifft und der Lichtkegel sich in vertikaler Richtung etwa vom Fahrzeugschweller bis zur Gürtellinie des Fahrzeugs erstreckt. Der Lichtstrahler am Fahrzeughinter- und -vorderwagen sind vorzugsweise derart ausgerichtet, daß der Lichtkegel etwa mittig unter einem Winkel zur Bodenfläche ausgerichtet ist und beim Fahrzeughinterwagen in vertikaler Richtung auf einen nach oben gewölbten Bereich des Heckteils auftrifft und der Lichtkegel im unteren Rand der Heckscheibe überdeckt. Beim Fahrzeugvorderwagen umfaßt der Lichtkegel in vertikaler Richtung den vorderen Haubenbereich.

Durch die Erfindung wird eine Beurteilung der Wolkigkeit und Fleckigkeit nach einem bestimmten standardisierten Verfahren mit festgelegten Vorrichtungselementen, wie einem Beleuchtungssystem durchgeführt. Zur Beurteilung ist nach der Erfindung vorgesehen, daß zum einen die Betrachtungspositionen auf dem markierten Weg festgelegt sind und zum anderen kann die zu beurteilende Person in einem festgelegten Abstand auf dem Weg um das Fahrzeug herum gehen, um die zu beurteilende Fläche zu überprüfen.

Grundsätzlich gilt, die Beurteilung von Wolkigkeit/Fleckigkeit erfolgt nicht ausschließlich aus einer oder mehreren Betrachtungspositionen, sondern wird viel auffälliger in der Bewegung des Beurteilers. Wolken und Flecken in einer Lackierung tauchen nur bei Metallic-Lackierungen auf. Die auffallenden Schattierungen resultieren aus in unterschiedlicher Richtung liegenden Metallpartikeln (genannt Bronze). Bewegt man sich nun entlang einer wolkig/fleckig lackierten Fahrzeugkarosserie, so steigt die Auffälligkeit um ein Vielfaches, da das menschliche Auge vor allem den Hell-/Dunkel-Wechsel im Unterbewußtsein wahrnimmt. Mit ein Grund, weswegen man sich bewegen soll bei der Beurteilung ist die Tatsache, daß sich nur extreme Wolkigkeit fotographisch darstellen läßt. Dagegen die Anfertigung eines Videofilms ermöglicht ebenfalls wie bei einer Bewegung die Aufzeichnung auch schon geringfügiger Wolkigkeit/Fleckigkeit.

Damit eine optimale Beurteilung der Wolkigkeit/Fleckigkeit erfolgen kann, ist nicht nur der Prüfaufbau und Prüfablauf, sondern auch noch eine Kategorierung nach einer sogenannten Zehnerskala wichtig. Da bei der Prüfung immer noch eine gewisse Subjektivität nicht von der Hand zu weisen ist, wird immer die Prüfung im Expertenteam empfohlen. In der Praxis sieht das so aus, daß mindestens drei Fachleute bestehend aus Fertigung, Nacharbeit sowie Qualitätssicherung einzeln beurteilen und danach die Einzelergebnisse zu einem Durchschnitt zusammengefahren werden.

Die Zehnerskala beschreibt die Beurteilungskategorien, wobei Punkt 1 einen guten Wert und Punkt 10 einen schlechten Wert darstellt:
(1) keine Wolkigkeit/Fleckigkeit erkennbar
(2) nur sehr leichte Marmorierung der Lackierung erkennbar
(3) homogene verschwommene Marmorierung erkennbar
(4) gleichmäßige Marmorierung in der Lackierung erkennbar
(5) leichte Schattierungen oder helle, verschwommene Flecken erkennbar
(6) grobe Schattierung oder klar abgrenzende Flecken erkennbar (Fehlerbilder der Stufe 6 bis 10 sind nacharbeits- und kundenrelevant)
(7) leicht erkennbare Schattierungen oder klar abgrenzende Flecken, Fehler sind fotographisch erfaßbar
(8) bei Neonlicht (2.000 Lux) schwer feststellbare Schattierung oder Flecken
(9) bei Neonlicht (2.000 Lux) leicht feststellbare Schattierung oder Flecken
(10) bei Neonlicht (2.000 Lux) sofort auffallende Schattierung/Flecken

Ein Ausführungsbeispiel der Erfindung ist in den Zeichnungen dargestellt und wird im folgenden näher beschrieben.

Es zeigen
- Fig. 1: eine schaubildliche Darstellung eines Prüfplatzes mit markiertem Weg und festplazierten Lichtstrahlern,
- Fig. 2: eine Draufsicht auf einen Prüfplatz mit markiertem Weg und jeweils zwei Lichtstrahlern an jeder Fahrzeugseitenfläche,
- Fig. 3: eine Draufsicht auf den Prüfplatz mit markiertem Weg und jeweils einem Lichtstrahler an den Seitenflächen des Fahrzeugs sowie jeweils einem Lichtstrahler am Vorder- und Hinterwagen,
- Fig. 4: eine Seitenansicht des Fahrzeugs mit einem dem Vorderwagen zugeordneten Lichtstrahler,
- Fig. 5: eine Seitenansicht des Fahrzeugs mit einem dem Hinterwagen zugeordneten Lichtstrahler und
- Fig. 6: eine Vorderansicht des Fahrzeugs mit einem einer Fahrzeugseite zugerichteten Lichtstrahler.

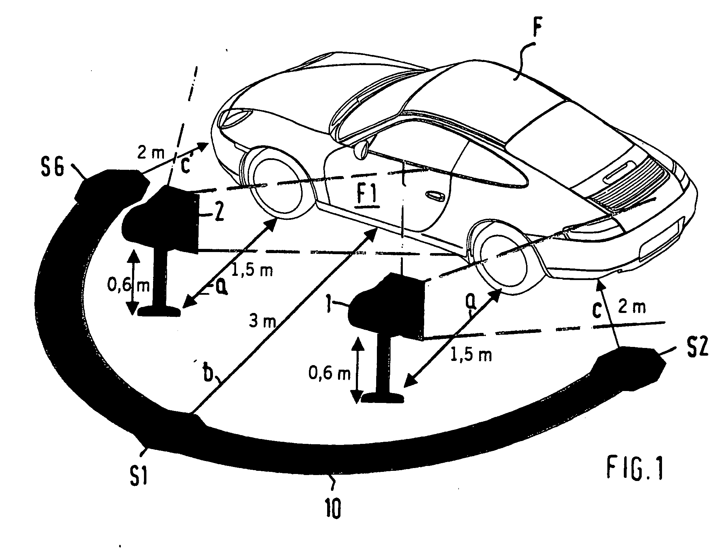

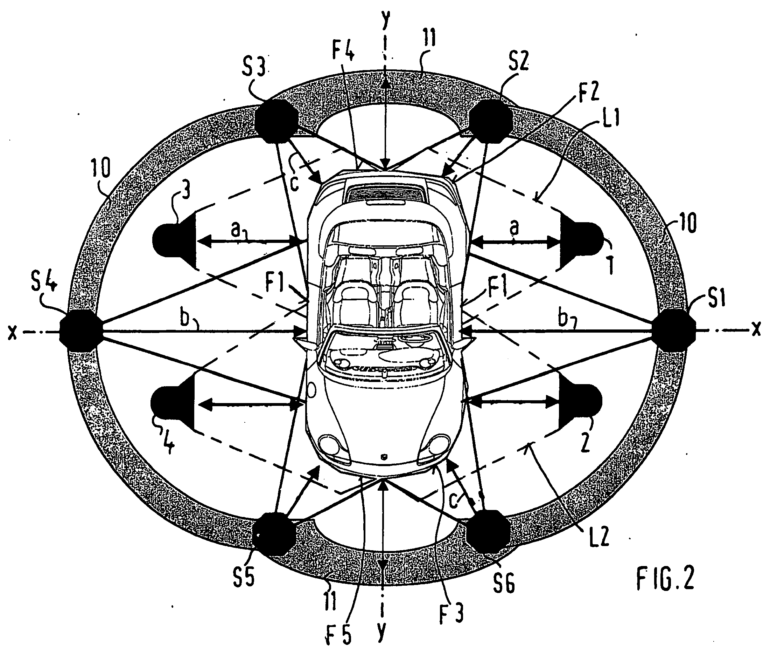

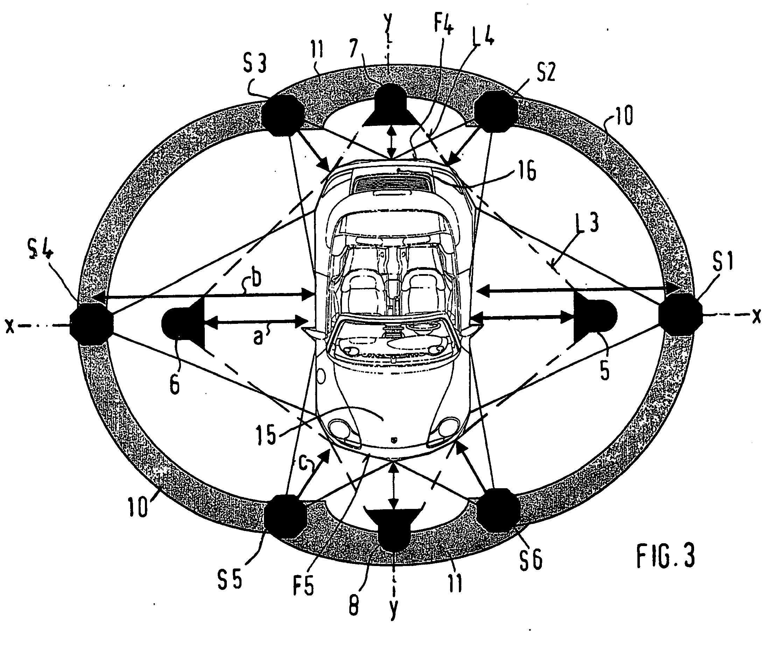

Zum Beurteilen von Lackoberflächen an Fahrzeugkarosserien sind fest positionierte Lichtstrahler 1, 2, 3 und 4 gemäß Fig. 1 und 2 und fest positionierte Lichtstrahler 5, 6, 7 und 8 gemäß Fig. 3 vorgesehen. Diese Lichtstrahler sind innerhalb eines markierten Weges 10, 11 angeordnet, wobei verschiedene Betrachtungspositionen S1 bis S6 für einen Beobachter auf diesem Weg 10, 11 angeordnet sind.

Wie in Fig. 1 zu erkennen ist, sind die Abstände der Leuchtstrahler zum Fahrzeug F mit einem Abstand a = 1,5m festgelegt. Die Betrachtungspositionen S1 und S4 auf dem Weg 10 sind mit einem Abstand b = 3m zum Fahrzeug F festgesetzt, wobei die Betrachtungspositionen S2, S3, S5 und S6 mit einem Abstand c = 2m zum Fahrzeug vorgesehen sind.

Der markierte Weg 10 der jeweils im Abstand seitlich des Fahrzeugs F angeordnet ist, ist als Halbkreis ausgeführt und geht in einem weiteren Bogen 11 vor und hinter dem Fahrzeug über. Auf diesen Wegen 10, 11 sind gemäß Fig. 2 die Betrachtungspositionen S1 und S4 etwa in der Fahrzeugmittenquerebene X-X vorgesehen, wobei die Lichtstrahler 1, 2 und 3, 4 jeweils in einem kleinen Abstand a zum Fahrzeug, zu beiden Seiten der Fahrzeugmittenquerebene X-X angeordnet sind. Die Lichtkegel L1 und L2 der Lichtstrahler 1, 2 überschneiden sich an der Fahrzeugseitenfläche F1.

Die Sichtbereiche aus den Betrachtungspositionen S1 und S2 bzw. S6 ergänzen sich derart, daß die gesamte Seitenfläche F1 sowie ein Heckbereich mit der Fläche F2 und ein Frontbereich mit der Fläche F3 bis zur Fahrzeugmittenlängsebene Y-Y zur Beobachtung abgedeckt ist.

Bei der Ausführung gemäß Fig. 3 sind die Betrachtungspositionen S1 bis S6 gleich den Betrachtungspositionen gemäß Fig. 2 ausgeführt. Die den Seitenflächen F1 des Fahrzeugs F zugerichteten Lichtstrahler 5, 6 sind etwa in der Fahrzeugmittenquerebene X-X angeordnet, wobei die Lichtstrahler 5 und 6 die gesamte Länge der Seitenfläche F1 des Fahrzeugs F ausleuchten. In der Längsmittenebene Y-Y sind die Lichtstrahler 7, 8 im Abstand a zum Fahrzeug F angeordnet und weisen einen Lichtkegel L4 auf, der sich mit dem Lichtkegel L3 des Lichtstrahlers 5, 6 im Eckbereich des Fahrzeugs F trifft. Die Sichtbereiche aus den Betrachtungspositionen S1 und S2 überschneiden sich, so daß eine flächendeckende Beobachtung der Karosserieflächen sichergestellt ist.

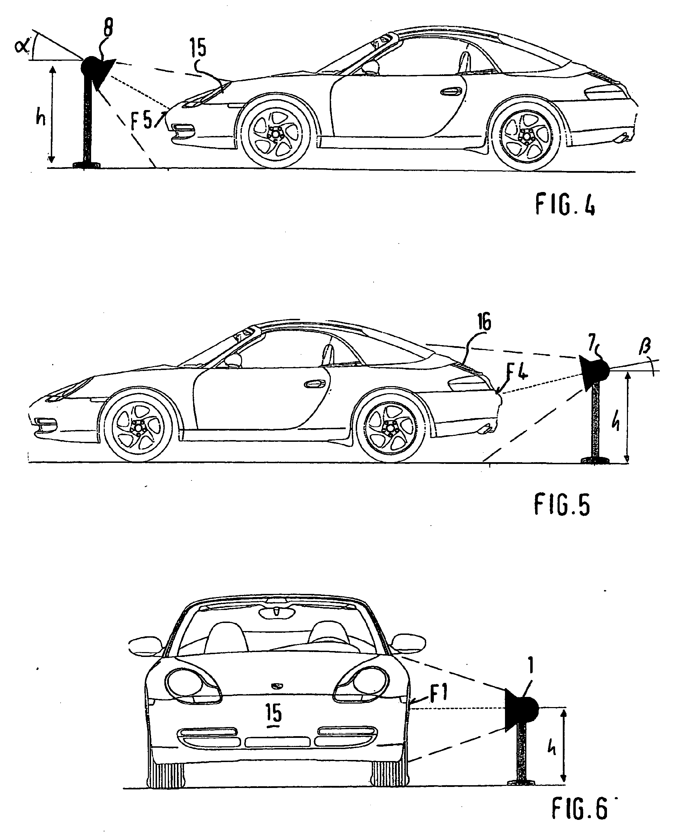

In Fig. 4 ist der Lichtstrahler 8 für den Vorderwagen 15 gezeigt, der in einer Höhe h = 0,6m angeordnet und unter einem Winkel von α = 20° zur Aufstandsfläche geneigt ist und der Lichtkegel leuchtet in vertikaler Richtung einen Teil der Fahrzeughaube aus. Entsprechend ist der Lichtstrahl L4 für das Fahrzeugheck 16 unter einem Winkel β = 15° zur Bodenfläche geneigt und der Lichtkegel reicht in vertikaler Richtung etwa bis zur Unterkante des Heckfensters. Bei dem Lichtstrahler 5 für die Fahrzeugseitenwand reicht der Lichtkegel in vertikaler Richtung bis zur Gürtellinie des Fahrzeugs.

## Patentansprüche

1. Verfahren zum visuellen Erkennen von Farbglanzabweichungen, insbesondere von Lackwolkigkeit und Lackfleckigkeit, in einer Oberflächenlackierung eines Fahrzeugs mit folgenden Verfahrensschritten:
- Anordnen mehrerer fest positionierter Lichtstrahler (1 bis 8) in vorbestimmten Abständen (a) zu den Außenflächen der beiden Fahrzeugseiten und zu den Außenflächen des Fahrzeugvorder- und -hinterwagens,
- partiell flächiges Anstrahlen dieser Fahrzeugaußenseiten, derart, dass die gesamte Länge der Seitenflächen und die des Vorder- und Hinterwagens erfasst werden,
- Festlegen eines markierten Wege (10,11), der unmittelbar hinter den lichtstrahlern um das Fahrzeug herum führt, wobei entlang des Weges (10,11) vorbestimmte Betrachtungspositionen angeordnet sind,
- Beobachtung der angestrahlten Flächen unter vorbestimmten Sichtbereichen und von den festgelegten Betrachtungspositionen (S1 bis S6) aus.

2. Verfahren nach Anspruch 1, **dadurch gekennzeichnet, daß** der markierte Weg (10) aus einem Halbkreis zu den Fahrzeugseitenflächen (F1) und einem anschließenden Kreisabschnitt (11) zu dem Fahrzeugvorder- und -hinterwagen (15, 16) besteht und auf dem Weg (10, 11) die Betrachtungspositionen (S1 bis S6) den Lichtstrahlern (1 bis 8) zugeordnet sind und zwischen diesen Betrachtungspositionen (S1 bis S6) auf dem markierten Weg (10, 11) weitere Positionen zur Inaugenscheinnahme der Fahrzeugflächen (F1 bis F5) bestehen.

3. Vorrichtung zum visuellen Erkennen von Farbglanzabweichungen, insbesondere von Lackwolkigkeit und Lackfleckigkeit, in einer Oberflächenlackierung eines Fahrzeugs mit:
- mehreren fest positionierten Lichtstrahlern (1 bis 8), die in vorbestimmten Abständen (a) zu den Außenflächen der Fahrzeugseiten und zu den Außenflächen des Fahrzeugvorder- und -hinterwagens, sowie in der Fahrzeugmittenlängsebene (Y-Y) für die Seitenflächen (F1) und annähernd in der Fahrzeugmittenquerebene (X-X) für den Vorder- und Hinterwagen (15, 16) angeordnet sind, wobei partiellflächig angestrahlte Flächen (F1 bis F5) durch das Auftreffen des Lichtes der Lichtstrahler (1 bis 8) auf den Fahrzeugseitenflächen und der Fahrzeugvorder- und Hinterseite entstehen, und wobei die gesamte Länge der Seitenflächen und der Vorder- und Hinterseite erfasst werden,
- einem markierten Weg (10, 11), der unmittelbar hinter den Lichtstrahlern (1 bis 8) um das Fahrzeug herum führt, und
- mehreren festgelegte Betrachtungspositionen (S1 bis S6), die entlang des markierten Weges (10, 11) derart angeordnet sind, dass die zu prüfenden Flächen unter vorbestimmten Sichtbereichen beurteilt werden können.

4. Vorrichtung nach einem der vorhergehenden Ansprüche, wobei der Sichtbereich aus den seitlichen Betrachtungspositionen (S1, S4) auf dem markierten Weg (10) einerseits die gesamte Fahrzeugseitenfläche (F1) und andererseits sich mit den Sichtbereichen aus den vorderen Betrachtungspositionen (S5 und S6) und den hinteren Betrachtungspositionen (S2 und S3) auf den Vorder- und Hinterwagen (15, 16) überdecken.

5. Vorrichtung nach einem der vorhergehenden Ansprüche 3 und 4, wobei, der Lichtstrahler (8) für die Fahrzeugvorderfläche (F5) derart ausgerichtet ist, daß der Lichtstrahl unter einem Winkel α von 20° zur Bodenfläche ausgerichtet und mittig auf der zu prüfenden Fläche auftrifft.

6. Vorrichtung nach einem der vorhergehenden Ansprüche 3 bis 5, wobei der Lichtstrahler (7) für die Fahrzeughinterfläche (F4) derart ausgerichtet ist, daß der Lichtkegel mittig unter einem Winkel von β 15° zur Bodenfläche ausgerichtet ist und in vertikaler Richtung auf einem nach oben gewölbten Bereich des Heckteils auftrifft und der Lichtkegel den unteren Rand der Heckscheibe überdeckt.

7. Vorrichtung nach einem der vorhergehenden Ansprüche 3 bis 6, wobei der Lichtstrahler (8) am Fahrzeugvorderwagen (15) derart ausgerichtet ist, daß der Lichtkegel in vertikaler Richtung auf den nach oben gewölbten Bereich des Bugteils auftrifft und der Lichtkegel teilweise die Fahrzeughaube überdeckt.

8. Vorrichtung nach einem der vorhergehenden Ansprüche 3 bis 7, wobei die seitlich angeordneten Lichtstrahler (1, 2; 5) unter einem Winkel von 90° zur Bodenfläche ausgerichtet sind und der Lichtkegel sich in vertikaler Richtung in einem Bereich vom Fahrzeugschweller bis zur Gürtellinie des Fahrzeugs (F) erstreckt.

## Claims

1. Method for visually detecting differences in colour gloss in particularly cloudy surface coating and mottled surface coating, in a surface coating of a vehicle having the following method steps:
- arrangement of a plurality of fixedly positioned light radiators (1 to 8) at predetermined distances (a) from the outer surfaces of the two sides of the vehicle and from the outer surfaces of the front and rear parts of the vehicle,
- partially planar irradiation of these outer sides of the vehicle in such a way that the entire length of the side surfaces and that of the front and rear parts of the vehicle are irradiated,
- definition of a marked path (10, 11), wherein predetermined viewing positions are arranged along the path (10, 11) which leads around the vehicle directly behind the light radiators,
- observation of the irradiated surfaces under predetermined visibility conditions and from the defined viewing positions (S1 to S6).

2. Method according to Claim 1, **characterized in that** the marked path (10) is composed of a semicircle with respect to the vehicle side surfaces (F1) and a subsequent circular section (11) with respect to the front and rear parts (15, 16) of the vehicle, and the viewing positions (S1 to S6) are assigned to the light radiators (1 to 8) on the path (10, 11), and there are further positions for viewing the vehicle surfaces (F1 to F5) between these viewing positions (S1 to S6) on the marked path (10, 11).

3. Device for visually detecting differences in colour gloss, in particular cloudy surface coating and mottled surface coating, in a surface coating of a vehicle having:
- a plurality of fixedly positioned light radiators (1 to 8) which are arranged at predetermined distances (a) from the outer surfaces of the vehicle sides and from the outer surfaces of the front and rear parts of the vehicle, as well as in the vehicle longitudinal centre plane (Y-Y) for the side surfaces (F1) and approximately in the vehicle transverse centre plane (X-X) for the front and rear parts of the vehicle (15, 16),
wherein as a result of the light from the light radiators (1 to 8) being incident on the side surfaces of the vehicle and the front and rear sides of the vehicle there are partially irradiated two-dimensional surfaces (F1 to F5), and wherein the entire length of the side surfaces and of the front and rear sides are recorded,
- a marked path (10, 11) which leads around the vehicle directly behind the light radiators (1 to 8), and
- a plurality of defined viewing positions (S1 to S6) which are arranged along the marked path (10, 11) in such a way that the surfaces to be tested can be assessed under predetermined visibility conditions.

4. Device according to one of the preceding claims, wherein, on the one hand, the field of vision from the lateral viewing positions (S1, S4) on the marked path (10) covers the entire side surface (F1) of the vehicle, and, on the other hand, said field of vision is congruent with the fields of vision from the front viewing positions (S5 and S6) and the rear viewing positions (S2 and S3) on the front and rear parts of the vehicle (15, 16).

5. Device according to one of the preceding Claims 3 and 4, wherein the light radiator (8) for the front surface (F5) of the vehicle is oriented in such a way that the light beam is oriented at an angle α of 20° with respect to the ground surface and is incident centrally on the surface to be tested.

6. Device according to one of the preceding Claims 3 to 5, wherein the light radiator (7) for the rear surface (F4) of the vehicle is oriented in such a way that the light cone is oriented centrally at an angle β of 15° with respect to the ground surface and is incident in the vertical direction on an upwardly curving region of the rear part, and the light cone covers the rear edge of the rear windscreen.

7. Device according to one of the preceding Claims 3 to 6, wherein the light radiator (8) on the front part (15) of the vehicle is oriented in such a way that the light cone is incident in the vertical direction on the upwardly curving region of the front part of the vehicle and the light cone partially covers the vehicle bonnet.

8. Device according to one of the preceding Claims 3 to 7, wherein the laterally arranged light radiators (1, 2; 5) are oriented at an angle of 90° with respect to the ground surface, and the light cone extends in the vertical direction in a region from the sillboard of the vehicle as far as the belt line of the vehicle (F).

## Revendications

1. Procédé pour la reconnaissance visuelle d'écarts de brillant coloré dans une peinture de surface d'un véhicule, en particulier de la présence de nuages et de taches de peinture, comprenant les étapes suivantes :
- disposition de plusieurs projecteurs de lumière (1 à 8) fixement positionnés à des distances prédéterminées (a) des surfaces extérieures des deux côtés du véhicule et des surfaces extérieures de l'avant et de l'arrière du véhicule,
- éclairage partiellement surfacique de ces surfaces extérieures du véhicule, de telle sorte que toute la longueur des surfaces latérales et la longueur de l'avant et de l'arrière du véhicule sont englobées,
- définition d'un parcours repéré (10, 11) qui mène tout autour du véhicule juste derrière les projecteurs de lumière, des positions d'observation prédéterminées étant disposées le long du parcours (10, 11),
- observation des surfaces éclairées dans des champs de vision prédéterminés et depuis les positions d'observation définies (S1 à S6).

2. Procédé selon la revendication 1, **caractérisé en ce que** le parcours repéré (10) est constitué d'un demi-cercle par rapport aux surfaces latérales (F1) du véhicule suivi d'un segment de cercle (11) par rapport à l'avant (15) et à l'arrière (16) du véhicule, et les positions d'observation (S1 à S6) sur le parcours (10, 11) sont associées aux projecteurs de lumière (1 à 8), et d'autres positions pour l'examen visuel des surfaces (F1 à F5) du véhicule existent entre ces positions d'observation (S1 à S6) sur le parcours repéré (10, 11).

3. Dispositif pour la reconnaissance visuelle d'écarts de brillant coloré dans une peinture de surface d'un véhicule, en particulier de la présence de nuages et de taches de peinture, comprenant :
- plusieurs projecteurs de lumière (1 à 8) fixement positionnés, qui sont disposés à des distances prédéterminées (a) des surfaces extérieures des deux côtés du véhicule et des surfaces extérieures de l'avant et de l'arrière du véhicule, ainsi que dans le plan médian longitudinal (Y-Y) du véhicule pour les surfaces latérales (F1) et approximativement dans le plan médian transversal (X-X) du véhicule pour l'avant (15) et l'arrière (16) du véhicule, sachant que des surfaces (F1 à F5) éclairées de manière partiellement surfacique sont obtenues par l'incidence de la lumière des projecteurs de lumière (1 à 8) sur les surfaces latérales du véhicule et sur l'avant et l'arrière du véhicule, et sachant que toute la longueur des surfaces latérales et de l'avant et de l'arrière est englobée,
- un parcours repéré (10, 11), qui mène tout autour du véhicule juste derrière les projecteurs de lumière (1 à 8), et
- plusieurs positions d'observation définies (S1 à S6), qui sont disposées le long du parcours repéré (10, 11) de telle sorte que les surfaces à contrôler peuvent être évaluées dans des champs de vision prédéterminés.

4. Dispositif selon l'une quelconque des revendications précédentes, sachant que le champ de vision depuis les positions d'observations latérales (S1, S4) sur le parcours repéré (10) d'une part couvre toute la surface latérale (F1) du véhicule et d'autre part se chevauche avec les champs de vision depuis les positions avant (S5 et S6) et arrière (S2 et S3) d'observation sur l'avant (15) et l'arrière (16) du véhicule.

5. Dispositif selon l'une quelconque des revendications précédentes 3 et 4, sachant que le projecteur de lumière (8) pour la surface avant (F5) du véhicule est orienté de telle sorte que le rayon lumineux est orienté sous un angle α de 20° par rapport à la surface du sol et rencontre centralement la surface à contrôler.

6. Dispositif selon l'une quelconque des revendications précédentes 3 à 5, sachant que le projecteur de lumière (7) pour la surface arrière (F4) du véhicule est orienté de telle sorte que le cône lumineux est orienté centralement sous un angle β de 15° par rapport à la surface du sol et rencontre, en direction verticale, une région de la partie arrière qui est incurvée vers le haut, et que le cône lumineux couvre le bord arrière de la lunette arrière.

7. Dispositif selon l'une quelconque des revendications précédentes 3 à 6, sachant que le projecteur de lumière (8) sur l'avant (15) du véhicule est orienté de telle sorte que le cône lumineux rencontre, en direction verticale, la région de la partie avant qui est incurvée vers le haut, et que le cône lumineux couvre en partie le capot du véhicule.

8. Dispositif selon l'une quelconque des revendications précédentes 3 à 7, sachant que les projecteurs de lumière (1, 2 ; 5) disposés latéralement sont orientés sous un angle de 90° par rapport à la surface du sol et que le cône lumineux s'étend, en direction verticale, dans une plage allant du seuil de porte jusqu'à la ligne de ceinture du véhicule (F).
